# EUROPEAN PATENT APPLICATION

(11) **EP 1 278 175 A2**
(43) Date of publication of application: **22.01.2003**
(21) Application number: 02090259.9
(22) Date of filing: 16.07.2002
(51) Int. Cl.: G09F 15/00

(54) **Message displaying apparatus**

(30) Priority: 20.07.2001 ZA 200105988
(71) Applicant: Maerlaender, Peter Karl, 15837 Baruth / Mückendorf (DE)
(72) Inventor: Venn, Norman Clifford, Midrang, Gauteng (ZA)
(74) Representative: Eisenführ, Speiser & Partner

(57) **Abstract**

The invention concerns to a message displaying apparatus comprising:
- a support structure being arranged to carry a vane assembly and including a base and a support post, said support post extending parallel to a rotational axis for said vane assembly; and
- said vane assembly being arranged to rotate about said rotational axis and comprising three or more vanes.

The present invention can produce the effect of a three-dimensional image with the added effect of movement or the illusion of animation.

## Description

### FIELD OF INVENTION

This invention relates to a message displaying apparatus either for alerting or notifying a passer-by of the existence of an emergency or a hazard, such as a stationary vehicle, or for use as a signboard for displaying the name or logo of a business or product.

### BACKGROUND OF THE INVENTION

There is a continuous need to display messages in a novel and effective manner. In particular, it is desirable to warn passers-by of a potentially hazardous situation, with it often being necessary to attract attention to a location where assistance is required. Typically, at present, a warning device comprises a substantially planar triangular device that is fitted with a plurality of reflectors, the device, in use, being supported or propped up by a hinged extension or a stand. These warning devices are usually placed a few meters away from a stationary vehicle, so that passers-by can, upon seeing the triangle, be alerted to a situation in which they should be cautious and/or in which assistance is required. In practice, however, these devices are not able to provide sufficient warning, primarily due to them being flat, static objects, which are noticeable normally only from a relatively close distance.

In addition, typical devices for conveying a commercial message comprise a vane arrangement that is mounted to a support post so that it can be rotated by wind. Typically, the vane arrangement comprises a substantially flat panel having slightly angled, transverse sections at the distal, vertical edge of the panel, which when acted upon by a breeze causes the panel to rotate, in an eye-catching manner, so as to draw attention to the commercial message being displayed on the panel.

However, the above two arrangements have a number of disadvantages. As indicated above, the hazard triangle is stationary and therefore does not sufficiently draw attention to the hazard. Equipment in use at present, to convey a commercial message is achieved by the use of a flat surface with slightly angled extrusions at the end of each vertical border of the surface which when activated by a breeze causes the flat panel to rotate with the effect of a two dimensional Impression.

It would therefore be desirable to provide a message displaying apparatus for displaying a hazard or commercial message that is eye-catching in order to draw attention to a hazardous situation and/or commercial message.

### SUMMARY OF THE INVENTION

The invention provides a message comprising:
- a support structure being arranged to carry a vane assembly and including a base and a support post, said support post extending parallel to a rotational axis for said vane assembly; and
- said vane assembly being arranged to rotate about said rotational axis and comprising three or more vanes.

The present invention can produce the effect of a three-dimensional image with the added effect of movement or the illusion of animation. On the one hand the present invention provides a device that will be effective in providing a danger warning signal or alert attention via perceived movement in a different manner to that of the prior art. On the other hand the present invention also provides a device for communicating a visual message by using pre-determined static patterns or graphic images which merge due to movement of the equipment and appear to collectively convey an inter-related message.

In accordance to a preferred embodiment of the invention, said apparatus further comprises a first magnet mounted to said support post, and a second magnet mounted to said vane assembly, said first and second magnets being arranged in a repelling fashion for allowing said vane assembly to be suspended above said support structure. The usage of repelling magnets defines a substantially frictionless contact between the vane assembly and the support structure.

According to another preferred embodiment of the invention each vane has a profile being designed to work in unison with each profile of said other vanes to produce a pressure point caused by different wind speeds due to the curvature of said profiles of said vanes and in doing so causing said vane assembly to rotate around said rotational axis. Together with the frictionless contact it causes the unit to turn around in an easy and steady way.

According to another embodiment said vanes are movable between a deployed position and a stowed position. Preferably, the vanes in said deployed position are spaced apart from each other and the vanes in said stowed position are folded together so as to be substantially co-planar. Thus, the apparatus demands only rare storage place and may be quickly and easily deployed from a collapsed, disassembled position.

Preferably, said base comprises a plurality of legs and the legs can advantageously be moved between a deployed position and a stowed position. Thus, the apparatus grants a save stand on planar as well as on uneven ground. To minimize storage place said legs are folded together so as to allow said support structure to be stowed. For mounting the apparatus the legs are spaced apart from another so as to support said vane assembly.

According to a further embodiment each vane of said vane assembly is connected to an adjacent vane so as to define a hollow body which surrounds said rotational axis. Preferably, said hollow body is being of trigonal prismatic shape with curved sides between the adjacent vanes. Thus, the display of a commercial or hazard message is improved because of the resulting impressive three-dimensional appearance of the rotating apparatus.

The displaying apparatus may be used either for displaying a hazard message or for displaying a commercial message.

Further embodiments of the invention are object of the additional dependent claims.

### BRIEF DESCRIPTION OF THE DRAWINGS

- Figure 1: shows a perspective view of a message displaying apparatus for displaying a hazard message according to the invention, the apparatus being shown in an assembled, deployed position, with a first message being carried on the apparatus;
- Figure 2: shows a perspective view of the apparatus shown in Figure 1 in a collapsed, disassembled position, ready to be stowed;
- Figure 3: shows a top view of the apparatus shown in Figure 1;
- Figure 4: shows an example of a second message that could be carried on the apparatus, the message taking the form of reflective material for alerting passers-by about a hazard or an emergency;
- Figure 5: shows an example of a sequence of images that could be carried by the individual vanes of the apparatus;
- Figure 6: shows a perspective view of a message displaying apparatus for displaying a commercial message according to the invention;
- Figure 7: shows a perspective view of a message displaying apparatus in an alternative design;
- Figure 8: details of the apparatus according Figure 7; and
- Figure 9: shows a perspective view of a message displaying apparatus in another alternative design;

### DESCRIPTION OF EMBODIMENTS

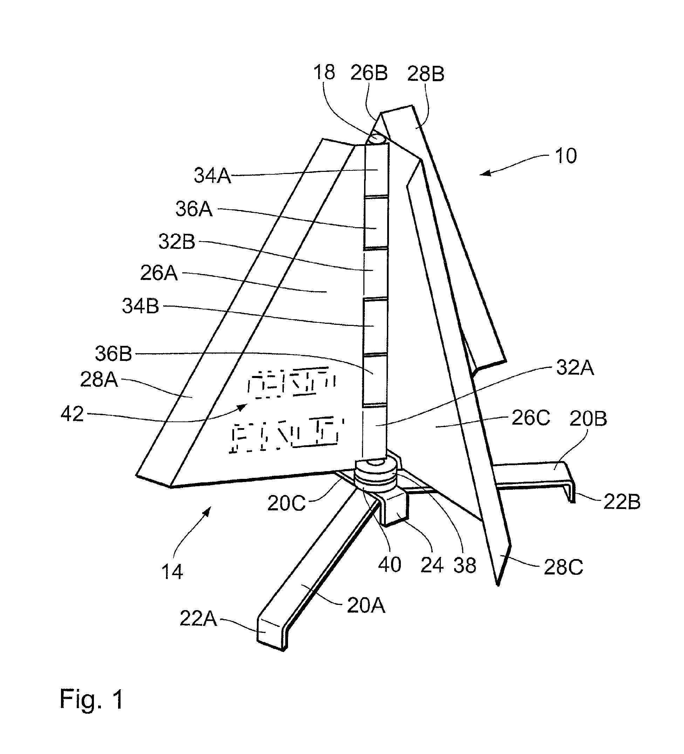

Referring to Figures 1 to 3, a message displaying apparatus 10 comprises a support structure 12 and a vane assembly 14. The Support structure 12 includes a base or stand 16, from which a support post 18 extends for receiving the vane assembly 14. The base 16 takes the form of a tripod comprising three legs 20A, 20B and 20C. Alternatively, the support structure 12 may be directly mounted to the side of a vehicle or truck for allowing the apparatus 10 to be quickly and easily deployed.

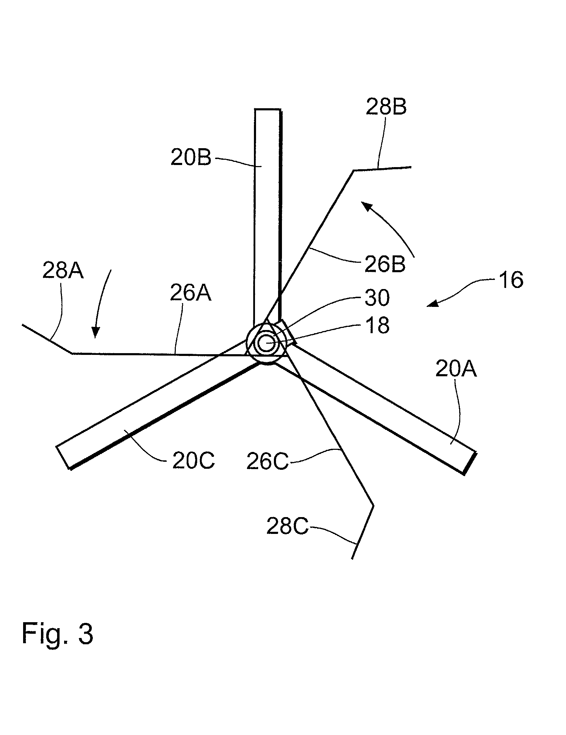

The legs 20A, 20B and 20C terminate distally in downwardly projecting feet 22A, 22B and 22C, for supporting the apparatus 10 on a surface. The uppermost leg 20C terminates proximally in a downwardly projecting stop element 24, so that in use the legs 20A, 20B and 20C are spaced equiangularly apart from one another so as to securely support the apparatus 10. The spaced-apart relationship of the legs 20A, 20B and 20C can be clearly seen in Figure 3.

The vane assembly 14 comprises three vanes 26A, 26B and 26C. Each vane 26A, 26B and 26C terminates in a transversely extending sail 28A, 28B and 28C for catching the wind, thereby allowing the vane assembly 14 to rotate, once the apparatus 10 has been assembled. The vanes 26A, 26B and 26C are typically constructed from a rigid material, such as a plastics material. Clearly, however, other materials, such as a fabric or a metal could be used to manufacture the vanes.

The vanes are carried on and supported by a round cylindrical tube 30, with the proximate ends of the vanes 26A, 26B and 26C terminating in a plurality of hinge members 32A and 32B, 34A and 34B, and 36A and 36B respectively, for accommodating the tube 30. The hinge members 32A, 32B, 34A, 34B, 36A and 36B allow the vanes 26A, 26B and 26C to be securely mounted to the tube 30, by a friction fit.

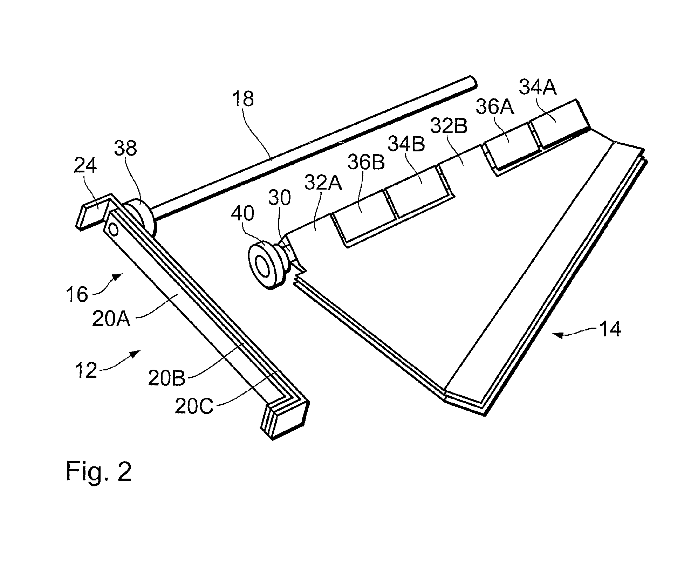

Significantly, the vanes 26A, 26B and 26C are collapsible by folding the vanes together, resulting in a compact apparatus that can easily be stowed away. Similarly, the legs 20A, 20B and 20C are pivotally connected to each other by means of the support post 18, thereby allowing the legs to be collapsed into a more compact structure. In this regard, the legs 20A, 20B and 20C, and their associated feet 22A, 22B and 22C are arranged such that in the collapsed position leg 20B overlies leg 20A and leg 20C in turn overlies leg 20B. This collapsed position of the apparatus 10 is clearly shown in Figure 2.

The tube 30 is sized to fit over the post 18 for allowing the vane assembly 14 to rotate on the support structure 12. Concerning the shown embodiment the support post 18 contains a rotational axis for the vane assembly 14. In other embodiments the rotational axis may be in other parallel positions to the support post 18. To assist in the rotation, a pair of circular magnets 38 and 40 are mounted to the base of the post 18, atop leg 20C, and to the base of the tube 30, respectively. The magnets 38 and 40 are arranged so that like poles of the magnets 38 and 40 face each other in a repelling fashion. As a result, the tube 30, carrying the vane assembly 14, is suspended above the legs 20A, 20B and 20C of the support structure 12, as shown in Figure 1. This arrangement provides a substantially frictionless contact between the vane assembly 14 and the support structure 12 for facilitating the rotation of the vane assembly 14.

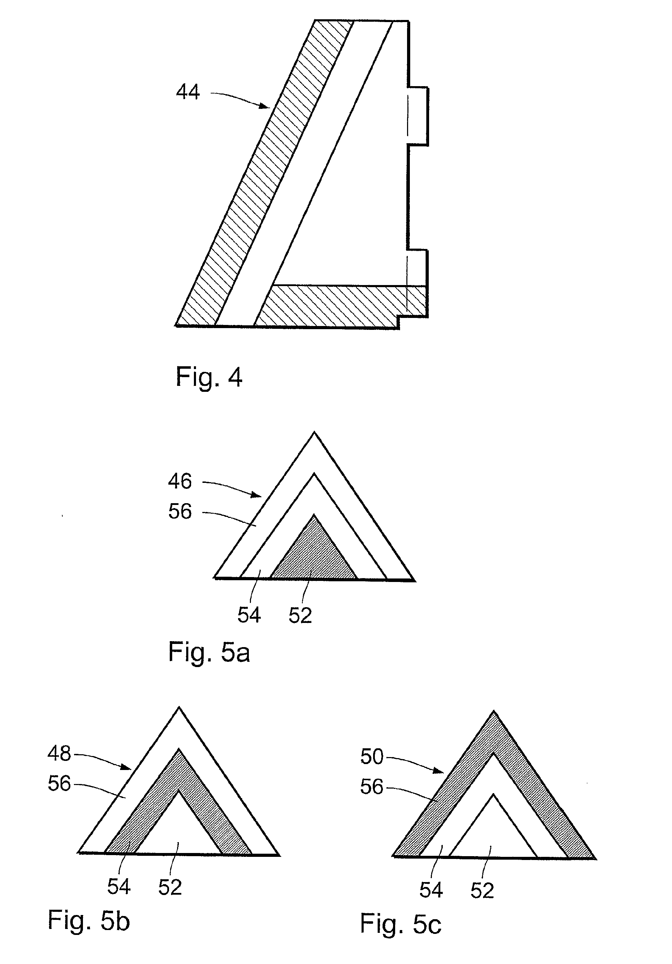

The vanes 26A, 26B and 26C carry either promotional material 42, as shown in Figure 1, or reflective or fluorescent material 44, as shown in Figure 4. The invention also provides for a combination of various colours in various sequences that simulate movement or the impression of movement when the vanes rotate. This impression of movement is achieved by providing a sequence of images on the vanes 26A, 26B and 26C. An example of such a sequence of images is shown in Figure 5, wherein the images 46, 48 and 50 are carried on the vanes 26A, 26B and 26C respectively. The images 46, 48 and 50 each comprise three segments 52, 54 and 56, with the segments 52, 54 and 56 being relatively darker on the images 46, 48 and 50 respectively. Thus, as the vane assembly is rotating, the impression of movement is created. In the example shown in Figure 5, the impression of an upwardly, or downwardly, depending on the direction of rotation, moving arrow is created.

Clearly, however, the images could take the form of any strategically placed graphics on either side of the vanes, so that when the vane assembly is rotating, they produce the effect of movement in a pre-determined direction. The materials used in the graphics are of such a nature that the effect is visible in day-time as well as night-time.

As a further example, a phrase or expression may be conveyed by the vane assembly, with the phrase or expression being spread out over the three vanes. Thus, for example, if the phrase "Please call again" is to be displayed, the vanes 26A, 26B and 26C will carry the words "Please", "call" and "again" respectively. Clearly any expression, phrase or logo may be conveyed in this manner, with the background also being capable of changing as the vane assembly rotates.

Thus the present invention provides an apparatus which, whether static or in motion, yields a visual warning or distress Signal or conveys a pre-determined message.

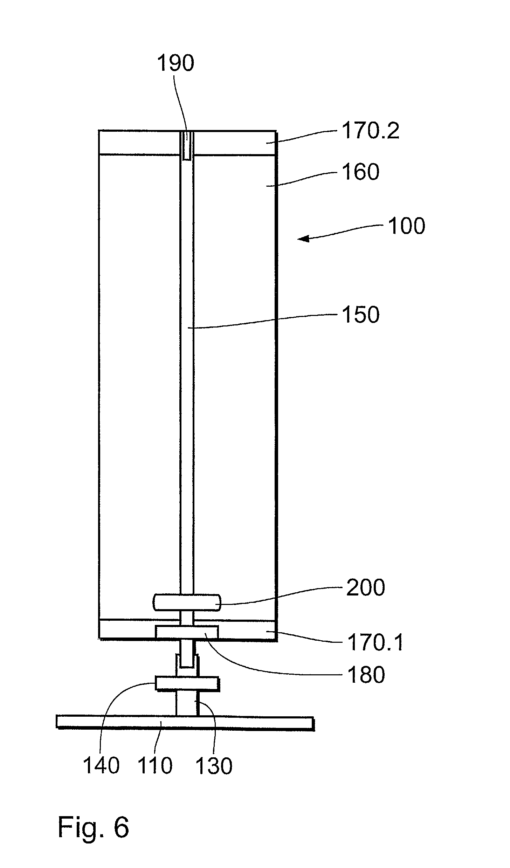

According a further aspect of the invention as shown in Figure 6 the apparatus 100 consists of a free standing base 110 and a vane assembly 160 with three or more vanes. Permanently secured to the center of the up-facing surface of the base 110 is the support post in form of a vertical pipe 130 on which a circular magnet 140 is mounted horizontally.

A tubular pole 150 is inserted and secured in the pipe 130. The pole 150 acts as a support and an rotational axis for the vane assembly 160. At each end of the vane assembly 160 is an end cap 170.1 and 170.2. The pole 150 passes through a center hole in the bottom end cap 170.1 and through a hole in a circular magnet 180. The top end cap 170.2 is held in position by means of a pin 190 which is inserted into the top end of the pole 150. The vane assembly 160 is held in position in a particular shape by the end caps 170.1 and 170.2.

The magnet 180 is secured and recessed into the bottom end cap 170.1 and is positioned in such a way that the polarity is opposite to the polarity of the lower magnet 140 causing the magnets 140, 180 to repel against each other and in so doing producing a cushion effect between the vane assembly 160 and the base 110. This effect then produces a minimal friction situation which enables the vane assembly 160 to turn with very little resistance.

A circular locking plate 200 is secured to the pole 150 to prevent the vane assembly 160 from being removed from the pole 150. This locking plate 200 also serves as a brake if the unit spins too fast.

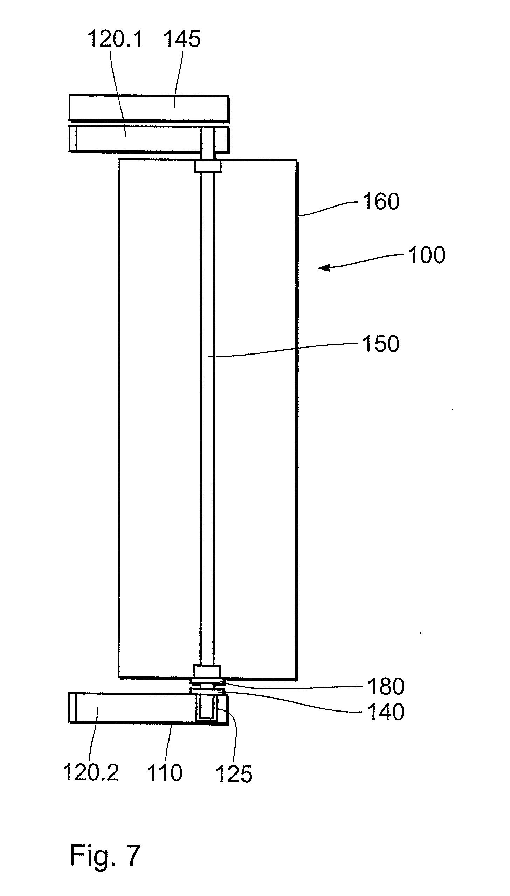

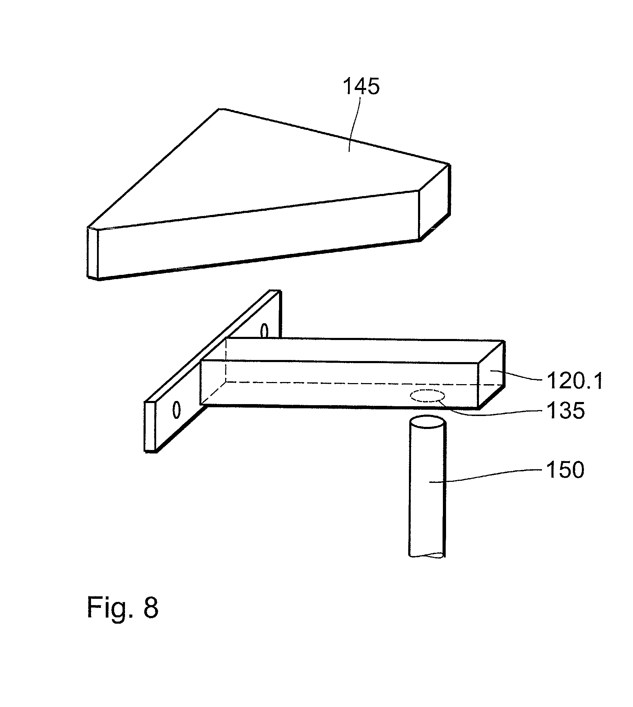

In an alternative embodiment of the invention the base 110 may be secured to a surface such as a wall by means of a bracket (Figure 7). A bottom end bracket element 120.2 picks up the support post in form of a hole 125. The pole 150 is secured by a top end bracket element 120.1. Figure 8 shows the upper end of the apparatus including the top end bracket element 120.1 in a more detailed way. A drill hole 135 acts as seat for the pole 150. For optical reasons and for protection against the weather a top cover 145 is placed upon the top end bracket element 120.1.

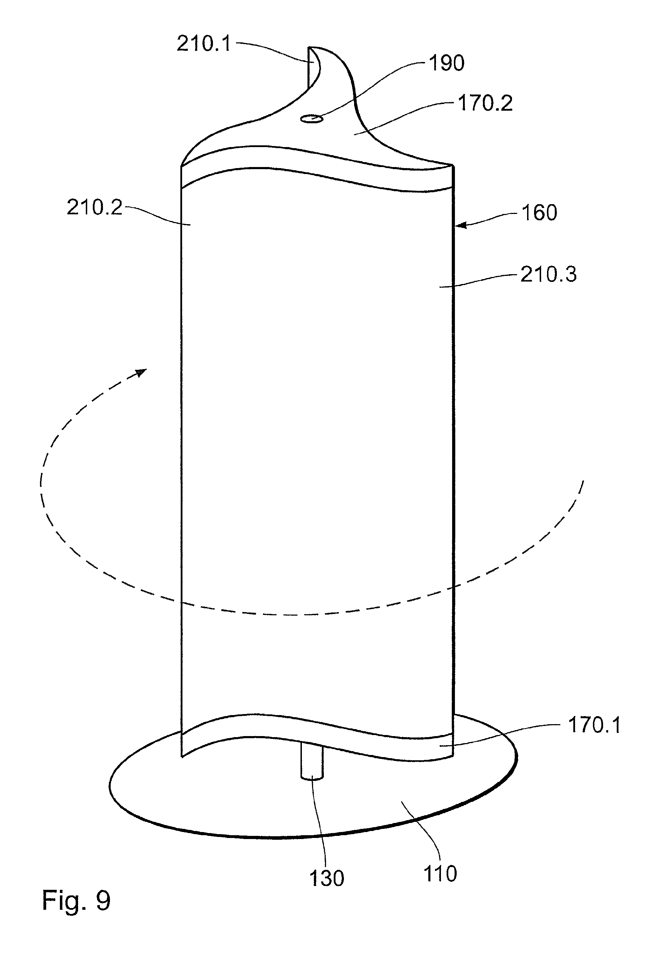

In another alternative embodiment of the invention the motion of the vane assembly 160 caused by wind is shown in more detail (Figure 9). The vane assembly 160 consists of three vanes 210.1, 210.2 and 210.3, whereby each vane 210.1, 210.2, 210.3 is connected to a adjacent vane 210.1, 210.2, 210.3 in that way that they build a hollow body which surrounds the rotational axis (not shown). The hollow body is being of trigonal prismatic shape with curved sides between the adjacent vanes 210.1, 210.2, 210.3. It should be understood that the shape of the hollow body is to a high degree variable. This includes variations of the numbers of vanes, their appearance or the design of the sides between the vanes.

Each profile of the vanes 210.1, 210.2, 210.3 of the vane assembly 160 works in unison with each profile of the other vanes 210.1, 210.2, 210.3 and together produce a pressure point caused by different wind speeds due to the curvature of the profiles of the vanes 210.1, 210.2, 210.3 and in so doing, together with the frictionless suspension system, causes the vane assembly 160 to turn around its rotational axis.

Design variations to the graphics placed on the surfaces of the vane assembly 160 can be made to meet different applications without departing from the object and scope of the invention. The effect of the graphics can produce the illusion of movement and even animation when the graphic from one vane becomes visible before than preceding vane disappears out of vision. The effect is also that of a three dimensional object.

## Claims

1. A message displaying apparatus comprising:
- a support structure being arranged to carry a vane assembly and including a base and a support post, said support post extending parallel to a rotational axis for said vane assembly; and
- said vane assembly being arranged to rotate about said rotational axis and comprising three or more vanes.

2. A message displaying apparatus according to claim 1, further comprising a first magnet mounted to said support post, and a second magnet mounted to said vane assembly, said first and second magnets being arranged in a repelling fashion for allowing said vane assembly to be suspended above said support structure.

3. A message displaying apparatus according to claims 1 or 2, wherein each of said vanes has a profile being designed to work in unison with each profile of said other vanes to produce a pressure point caused by different wind speeds due to the curvature of said profiles of said vanes, and in doing so causing said vane assembly to rotate around said rotational axis.

4. A message displaying apparatus according to any one of claims 1 to 3 wherein a message to be displayed by said apparatus is carried on said vane assembly.

5. A message displaying apparatus according to claims 1 to 4 wherein each vane terminates in a transversely extending sail of triangular shape.

6. A message displaying apparatus according to any one of claims 1 to 5, wherein said vanes are movable between a deployed position and a stowed position.

7. A message displaying apparatus according to claim 6, wherein said vanes in said deployed position are spaced apart from each other.

8. A message displaying apparatus according to claim 6, wherein said vanes in said stowed position are folded together so as to be substantially co-planar.

9. A message displaying apparatus according to any one of claims 1 to 8, wherein said base comprises a plurality of legs.

10. A message displaying apparatus according to claim 9, wherein said legs can be moved between a deployed position and a stowed position.

11. A message displaying apparatus according to claim 10, wherein said legs in said deployed position are spaced apart from another so as to support said vane assembly.

12. A message displaying apparatus according to claim 10, wherein said legs in said stowed position are folded together so as to allow said support structure to be stowed.

13. A message displaying apparatus according to any one of claims 1 to 12, wherein said vane assembly comprises a tube being arranged to slide over said support post.

14. A message displaying apparatus according to any one of claims 9 to 13, wherein each of said vanes of said vane assembly is connected to an adjacent vane so as to define a hollow body which surrounds said rotational axis.

15. A message displaying apparatus according to claim 13, wherein said hollow body is being of trigonal prismatic shape with curved sides between the adjacent vanes.

16. Use of an apparatus according to any one of claims 1 to 15 for displaying a hazard message.

17. Use of an apparatus according to any one of claims 1 to 15 for displaying a commercial message.
